(19) Europäisches Patentamt
European Patent Office
Office européen des brevets

(11) **EP 4 651 065 A1**

(12) **EUROPEAN PATENT APPLICATION**

(43) Date of publication:
**19.11.2025 Bulletin 2025/47**

(21) Application number: **25175252.3**

(22) Date of filing: **09.05.2025**

(51) International Patent Classification (IPC):
**G06Q 30/0601** (2023.01)    **G06N 3/045** (2023.01)
**G06N 3/08** (2023.01)

(52) Cooperative Patent Classification (CPC):
**G06Q 30/0631; G06N 3/045; G06N 3/08;
G06N 3/084; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.05.2024   US 202463649168 P
13.03.2025   US 202519078705**

(71) Applicants:
• **eBay Inc.
San Jose, CA 95125 (US)**
• **The Board of Trustees of the
University of Illinois
Urbana, IL 61801 (US)**

(72) Inventors:
• **WANG, Qihao
SAN JOSE, 95125 (US)**
• **AKASH, Pritom Saha
SAN JOSE, 95125 (US)**
• **KOLLIA, Varvara
SAN JOSE, 95125 (US)**
• **CHANG, Kevin Chen-Chuan
SAN JOSE, 95125 (US)**
• **JIANG, Biwei
SAN JOSE, 95125 (US)**
• **VON BRZESKI, Vadim
SAN JOSE, 95125 (US)**

(74) Representative: **Müller-Boré & Partner
Patentanwälte PartG mbB
Friedenheimer Brücke 21
80639 München (DE)**

(54) **CASCADING CATEGORY RECOMMENDER**

(57)    Some aspects relate to technologies for category recommendation for a listing platform using a cascading category recommender. The cascading category recommender includes a candidate category model, a per-user category encoder, and a category prediction model. Given a sequence of interacted categories for a user, the candidate category model selects candidate categories from a category set that sets forth categories for item listings on a listing platform. The per-user category encoder generates a category embedding for each interacted category based on interacted items for the user corresponding to each interacted category. The category prediction model selects categories for recommendation using the candidate categories, the sequence of interacted categories, and the category embeddings.

FIG. 1

**EP 4 651 065 A1**

**Description**

CROSS-REFERENCE TO RELATED APPLICATIONS

This application claims the benefit of U.S. Provisional Application No. 63/649,168, filed May 17, 2024, which is herein incorporated by reference in its entirety.

BACKGROUND

Listing platforms, such as e-commerce websites, are online platforms that offer products, services, digital content (e.g., music, videos, etc.), or other items to users. Such platforms typically offer a vast number of items. While some items are relevant to any given user, the majority is not. As a result, item retrieval for listing platforms is a particular Internet-centric problem that has proven to be difficult to fully address. That is, given a large number of items available on a listing platform, what items should be retrieved and presented to a user and in what order.

Given the vast number of items available, listing platforms include functionality, such as search and recommendation, to assist users in finding items of interest on the platforms. For instance, listing platforms often provide search capabilities that receive user queries and return search results identifying items relevant to the user queries.

Listing platforms also often leverage recommendation systems (often referred to as recommender systems or recommenders). Many conventional recommendation systems focus on recommending a particular set of items, but some listing platforms have begun to explore user interests at the category level. Among other things, category-level recommendation allows listing platforms to promote user engagement by expanding their interests to different types of items. In addition, it complements item-level recommendations when the latter becomes extremely challenging for users with little-known information and past interactions (i.e., the cold-start problem). Furthermore, category-level recommendation facilitates item-level recommendations by aiding in the exploration of item-level preferences.

SUMMARY

Some aspects of the present technology relate to, among other things, category-level recommendation for a listing platform using a cascading category recommender. The cascading category recommender includes a candidate category model, a per-user category encoder, and a category prediction model. Given a sequence of interacted categories for a user, the candidate category model selects candidate categories from a category set that sets forth categories for item listings on a listing platform. The candidate categories provide negative and positive samples that are cascaded to the candidate category model. The per-user category encoder generates a category embedding for each interacted category based on interacted items for the user corresponding to each interacted category. As such, the encoder provides user-specific category embeddings that encode item-level information, and in some aspects, user features for the user. The category prediction model selects categories for recommendation using the candidate categories, the sequence of interacted categories, and the category embeddings. During training, the category prediction model learns to separate negative samples and positive samples from the candidate category model.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

BRIEF DESCRIPTION OF THE DRAWINGS

The present technology is described in detail below with reference to the attached drawing figures, wherein:

FIG. 1 is a block diagram illustrating an exemplary system in accordance with some implementations of the present disclosure;

FIG. 2 is a block diagram showing an example model architecture for a cascading category recommender in accordance with some implementations of the present disclosure;

FIG. 3 is a block diagram showing an example candidate category model in accordance with some implementations of the present disclosure;

FIG. 4 is a block diagram showing an example per-user category encoder in accordance with some implementations of the present disclosure;

FIG. 5 is a block diagram showing an example category prediction model in accordance with some implementations of the present disclosure;

FIG. 6 is a flow diagram showing a method for training a category prediction model of a cascading category recommender in accordance with some implementations of the present disclosure;

FIG. 7 is a flow diagram showing a method for generating category recommendations using a cascading category recommender in accordance with some implementations of the present disclosure; and

FIG. 8 is a block diagram of an exemplary computing environment suitable for use in implementations of the present disclosure.

DETAILED DESCRIPTION

**Overview**

Recommender systems from existing works mainly focus on recommending a particular set of items, but there has recently been a growing interest in category-level recommendation. In category-level recommendation, instead of directly recommending items, categories of items are recommended.

Traditionally, category recommendation has been explored to aid item recommendation. These works leverage category-level preferences, or "intentions", to improve item-level recommendations, especially for new users facing the cold-start problem. Category-level preferences are generally more stable and less varied than item-level interests, as users often explore within a narrower range of categories despite showing interest in a broad array of items. This stability makes category-level signals more reliable, reducing the likelihood of overlooking preferred categories, unlike the more volatile item-level interactions. Additionally, the smaller pool of candidate categories simplifies the recommendation process for users with limited interaction history, making it more feasible than recommending a vast array of individual items. Essentially, focusing on a few relevant categories is more practical and user-friendly than overwhelming users with too many choices.

However, in many emerging scenarios, category recommendation is important in its own right with various applications. Despite the acknowledged advantages, category-level recommendation systems remain relatively unexplored. Previous approaches predominantly adapt methodologies designed for item-level recommendations to the context of category-level prediction. In other words, these approaches simply treat categories as items and ignore all information at the item level.

There are a number of technical challenges in training machine learning models for category-level recommendation. First, inferred categories from user interactions with items on a listing platform may be conflicting, making it difficult to select negative categories for training. For instance, suppose a given user has interacted with a first phone (Phone 1) but has not interacted with a second phone (Phone 2). For item-level recommendation, Phone 1 acts as a positive sample and Phone 2 acts as a negative sample for the user. However, in the context of category-level recommendation, the inferred category for both items is the same - i.e., Phone - and cannot be the negative of itself.

Second, inferred categories may be lossy, making users non-discriminative with their category histories. This is particularly evident with cold users who have a limited interaction history. For instance, two different users may have identical past interactions with certain categories, but the specific items with which they interacted with those categories may be different and the users may have different future interest. In this case, the reliance on category interactions alone renders these two users indistinguishable.

Third, a goal of recommending a concise set of categories presents a challenge of maintaining high precision within these few category recommendations. This makes it unsuitable to adapt item-level recommendations directly, as item-level recommendations mainly focus on high recall from a large number of predicted items.

Aspects of the technology described herein address the shortcomings in existing recommendation technologies, including the above noted technical challenges, by providing a cascading category recommender that generates category-level recommendations for listing platforms. The cascading category recommender includes three components: a candidate category model, a per-user category encoder, and a category prediction model. As will be described in further detail, given a sequence of interacted categories for a user, the candidate category model selects candidate categories from a category set that sets forth categories for item listings on a listing platform. The per-user category encoder generates a category embedding for each interacted category based on interacted items for the user corresponding to each interacted category. The category prediction model selects categories for recommendation using the candidate categories, the sequence of interacted categories, and the category embeddings.

The cascading category recommender described herein addresses the first challenge noted above by providing strong negative samples by inferring user preferences holistically. As item-level preferences can result in false negatives if they are utilized individually, aspects described herein aggregate them at category level by ignoring their item-level differences. In particular, given a sequence of interacted items for a user (i.e., item listings on the listing platform with which the user interacted), the interacted items are mapped to their corresponding categories to provide a sequence of interacted categories for the user. During model training, the sequence of interacted categories for each user is divided into two separate sequences. The first sequence is referred to herein as a sequence of past interacted categories and is used as input to the recommender for category prediction. The second sequence occurs after the first sequence and is referred to herein as a sequence of future interacted categories. This second sequence is used as ground truth for training purposes.

More particularly, given the sequence of past interacted categories for a user, the candidate category model generates a list of candidate categories for downstream processing by the category prediction model. Any candidate category that does not appear within the future interacted categories for the user is considered to be a negative sample for training the category prediction model.

The cascading category recommender described herein addresses the second challenge noted above by using item-level dependent category embeddings. In particular, the per-user category encoder generates category embeddings that are user-specific and therefore differentiate different users that are similar at the category level. For a given user, the user's item-level interactions per category (and in some cases, user features such as demographic information) are provided as input to the per-user category encoder. In some aspects, the per-user category encoder aims to reconstruct the input information such that the encoder output can be viewed as the embedding for each category interacted by a given user. Therefore, a user-dependent and item-level dependent category embedding will be generated for each category with which the user interacted. As a result, the same category can have different category embeddings for two different users. This provides for distinguishing users that are the same at the category level. In addition, the category embeddings can be enriched by providing more item-level information.

The cascading category recommender addresses the third challenge noted above by applying a precise-centric loss function, which is proportional to the likelihood of errors for negative samples. Limiting the size of output is equivalent to avoiding false positives. In other words, in addition to optimizing for the recall, a goal is to achieve high precision. The candidate category model is used to provide candidate categories with a high likelihood of being true positives. As a result, if these candidate categories indeed turn into negatives, it provides samples of false positives. The loss function penalizes more if the probability score for candidate categories from the candidate category model grows higher.

Additionally, the outputs of the candidate category model and the per-user category encoder are used to build the category prediction model to perform the final category prediction. The candidate category model is trained using a loss function that includes two parts. The first part aims to correct the errors made by the candidate category model and avoid false positives. The second part penalizes false negatives predicted by the category prediction model. To train the model altogether, a continuous loss function is designed to combine these two factors.

## Example System for Cascading Category Recommender

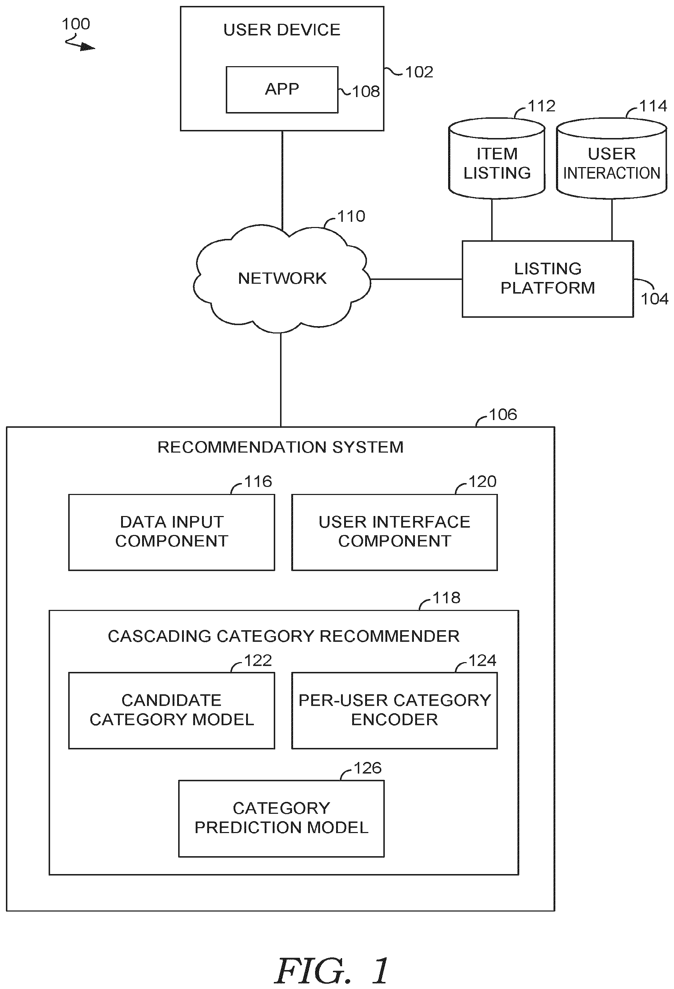

With reference now to the drawings, FIG. 1 is a block diagram illustrating an exemplary system 100 for training and deploying a cascading category recommender in accordance with implementations of the present disclosure. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

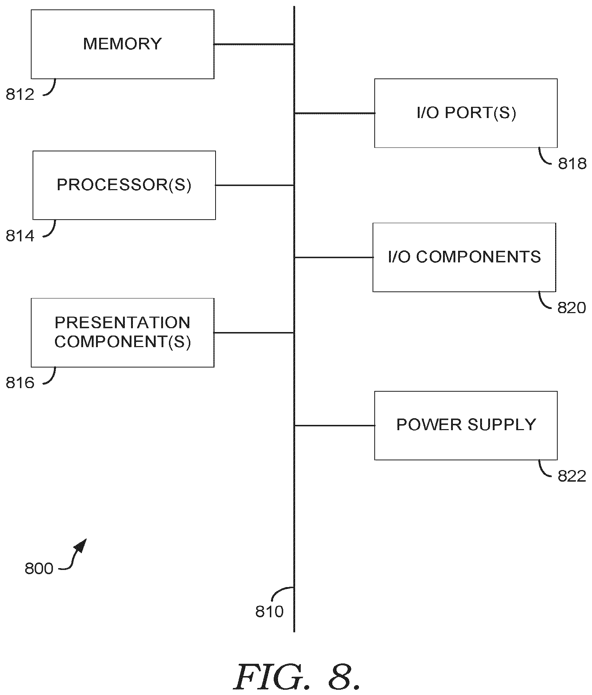

The system 100 is an example of a suitable architecture for implementing certain aspects of the present disclosure. Among other components not shown, the system 100 includes a user device 102, a listing platform 104, and a recommendation system 106. Each of the user device 102, the listing platform 104, and the recommendation system 106 shown in FIG. 1 can comprise one or more computer devices, such as the computing device 800 of FIG. 8, discussed below. As shown in FIG. 1, the user device 102, the listing platform 104, and the recommendation system 106 can communicate via a network 110, which may include, without limitation, one or more local area networks (LANs) and/or wide area networks (WANs). Such networking environments are commonplace in offices, enterprise-wide computer networks, intranets, and the Internet. It should be understood that any number of user devices and servers may be employed within the system 100 within the scope of the present technology. Each may comprise a single device or multiple devices cooperating in a distributed environment. For instance, the listing platform 104 and the recommendation system 106 could each be provided by multiple server devices collectively providing the functionality of the listing platform 104 and the recommendation system 106 as described herein. Additionally, other components not shown may also be included within the network environment.

The user device 102 can be a client device on the client-side of operating environment 100, while the listing platform 104 and the recommendation system 106 can be on the server-side of operating environment 100. The listing platform 104 and/or the recommendation system 106 can each comprise server-side software designed to work in conjunction with client-side software on the user device 102 so as to implement any combination of the features and functionalities discussed in the present disclosure. For instance, the user device 102 can include an application 108 for interacting with the listing platform 104 and/or the recommendation system 106. The application 108 can be, for instance, a web browser or a dedicated application for providing functions, such as those described herein. This division of operating environment 100 is provided to illustrate one example of a suitable environment, and there is no requirement for each implementation that any combination of the listing platform 104 and the recommendation system 106 remain as separate entities. For instance, in some aspects, the recommendation system 106 is a part of the listing platform 104. While the operating environment 100 illustrates a configuration in a networked environment with a separate user device, listing platform, and recommendation system, it should be understood that other configurations can be employed in which aspects of the various components are combined.

The user device 102 may comprise any type of computing device capable of use by a user. For example, in one aspect, a user device may be the type of computing device 800 described in relation to FIG. 8 herein. By way of example and not limitation, the user device 102 may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device. A user may be associated with the user device 102 and may interact with the listing platform 104 and/or the recommendation system 106 via the user device 102.

The listing platform 104 can be implemented using one or more server devices, one or more platforms with corresponding application programming interfaces, cloud infrastructure, and the like. The listing platform 104 generally provides, to user devices such as the user device 102, item listings describing items (physical or digital) available for purchase, rent, streaming, download, etc. For instance, the listing platform 104 could comprise an e-commerce platform, in which listed products or services are available for purchase by users of the user device 102 upon navigation to the listing platform 104. As other examples, the listing platform 104 could comprise a rental platform listing various items for rent (e.g., equipment, tools, real estate, vehicles, contract employees) or a media platform listing digital content items (e.g., digital content for streaming/download).

The functionality of the listing platform 104 includes provision of interfaces enabling surfacing of item listings for items to users of the listing platform 104. Item listings for items available for sale/rent/consumption via the listing platform 104 are stored by the item listings data store 112. Each item listing may include a description relating to an item comprising one or more of a price in a currency, reviews, images of the item, shipment options, a rating, a condition of the item, a size of the item, a color of the item, etc. In aspects, each item listing is associated with one or more categories from a category set defined by the listing platform 104. The category set sets forth a range of categories for the listing platform 104, which can include meta-categories and leaf categories. For example, the meta-categories are each divisible into subcategories (or branch categories), whereas leaf categories are not divisible.

The listing platform 104 also tracks information regarding user interactions with items and stores the information in a user interaction data store 114. Among other information, the user interaction data store 114 may store information for each user interaction that identifies: a user (e.g., via a user identifier) who performed the user interaction, an item (e.g., via an item identifier) with which the user interacted, an action performed by the user for the item (e.g., view, add to cart, add to wish list, purchase, etc.), and a time stamp indicative of a point in time when the user interaction occurred.

The recommendation system 106 generates category-level recommendations for users of the listing platform 104. As shown in FIG. 1, the recommendation system 106 includes a data input component 116, a cascading category recommender 118, and a user interface component 120. The components of the recommendation system 106 may be in addition to other components that provide further additional functions beyond the features described herein. The recommendation system 106 can be implemented using one or more server devices, one or more platforms with corresponding application programming interfaces, cloud infrastructure, and the like. While the recommendation system 106 is shown separate from the listing platform 104 and the user device 102 in the configuration of FIG. 1, it should be understood that in other configurations, some of the functions of the recommendation system 106 can be provided on the listing platform 104 and/or the user device 102. Additionally, while the components are shown as part of the recommendation system 106, in other configurations, one or more of the components can be provided by the listing platform 104 or another location not shown in FIG. 1. The components can be provided by a single entity or multiple entities.

In some aspects, the functions performed by components of the recommendation system 106 are associated with one or more applications, services, or routines. In particular, such applications, services, or routines may operate on one or more user devices, servers, may be distributed across one or more user devices and servers, or be implemented in the cloud. Moreover, in some aspects, these components of the recommendation system 106 may be distributed across a network, including one or more servers and client devices, in the cloud, and/or may reside on a user device. Moreover, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the aspects of the technology described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Additionally, although functionality is described herein with regards to specific components shown in example system 100, it is contemplated that in some aspects, functionality of these components can be shared or distributed across other components.

The data input component 116 accesses data for training the cascading category recommender 118 and for model inference (i.e., using the trained cascading category recommender 118 to predict categories as recommendations for users). Among other data, the data input component 116 accesses, from the user interaction data store 114, information regarding user interactions with item listings. The accessed information can include, for each user of the listing platform 104, a sequence of interacted items. A sequence of interacted items for a given user identifies item listings on the listing platform 104 with which the user interacted in an order in which the user interacted with the item listings.

The data input component 116 also accesses, for each user, a sequence of interacted categories, which is the sequence of categories corresponding to the sequence of interacted items for the user. The sequence of interacted categories for a given user can be obtained by mapping each interacted item from the sequence of interacted items for the user to a corresponding category. For instance, the data stored for each item listing may include an identification of a corresponding category, and the sequence of interacted categories can be obtained by mapping each interacted item to its corresponding category identified in its item listing data.

During training, the sequence of interacted categories for a given user is divided into two sequences. The first sequence is referred to herein as a sequence of past interacted categories, which is used as input to the model for category prediction. The second sequence occurs after the first sequence and is referred to herein as a sequence of future interacted categories, which is used as a ground truth for model training. For instance, a sequence of interacted categories for a user could be from a three month time period and could be divided into a sequence of past interacted categories from the first two months and a sequence of future interacted categories from the third month. In other words, the future interacted categories are considered "future" relevant in time to the past interacted categories. As will be described in further detail below, the sequence of past interacted categories is used as input to the model for predicting categories based on this sequence, and the sequence of future interacted categories is used as ground truth for comparison against the predicted categories. The sequence of interacted items can similarly be divided into a sequence of past interacted items and a sequence of future interacted items.

In some aspects, the data input component 116 also accesses user features for each user. The user features include information describing each user, such as, for instance, user demographics (e.g., age, gender, location, etc.) and user device features (e.g., type of device, operating system, etc.).

The cascading category recommender 118 is a machine learning model that is trained to predict categories for users based on their item interactions, and in some aspects, also based on their user features. As shown in FIG. 1, the cascading category recommender 118 includes three components: a candidate category model 122, a per-user category encoder 124, and a category prediction model 126. Each of these components 122, 124, and 126 can comprise a neural network (also referred to as an artificial neural network). As used herein, a neural network comprises multiple operational layers. For instance, in some cases a neural network can include an input layer and an output layer, as well as any number of hidden layers between the input layer and the output layer. Each layer comprises neurons. Different types of layers and networks connect neurons in different ways. Neurons have weights, an activation function that defines the output of the neuron given an input (including the weights), and an output. The weights are the adjustable parameters that cause a network to produce a correct output.

The candidate category model 122 takes as input a sequence of interacted categories for a user and selects candidate categories for downstream processing by the category prediction model 126. In some aspects, given a sequence of interacted categories for a user, the candidate category model 122 generates a probability score for each category from a category set defined for the listing platform 104. The category set sets forth all categories for item listings on the listing platform 104. The categories with the highest probability scores are selected as candidate categories. This could include, for instance, selecting the top N (where N is configurable) categories. In some aspects, the candidate category model 122 comprises a model architecture (e.g., a transformer-based model, or a Long Short-Term Memory (LSTM)-based model) that leverages information regarding the sequence with which the user interacted with the interacted categories.

The per-user category encoder 124 generates a category embedding for each category from a sequence of interacted categories for a user. For a given interacted category, the per-user category encoder 124 takes as input the interacted category, item(s) from the sequence of interacted items for the user that fall within that interacted category, and, in some aspects, user features for the user. Given these inputs, the per-user category encoder 124 generates a category embedding for the interacted category. In this way, the per-user category encoder 124 generates category embeddings that are user-specific based on each user's item interactions, and in some cases, their user features.

The category prediction model 126 takes as input the category embeddings generated by the per-user category encoder 124, the sequence of interacted categories for the user, and the candidate categories identified by the candidate category model 122. Given these inputs, the category prediction model 126 generates a probability score for each candidate category.

During training, as previously indicated, interacted categories for a user can be divided into a sequence of past interacted categories and a sequence of future interacted categories. Interacted items for the user can be similarly divided. The sequence of past interacted categories and the sequence of past interacted items are employed as input, while the sequence of future interacted categories is used as ground truth for model training.

In some aspects, two loss functions can be employed to update parameters (e.g., weights) of the category prediction model 126 (e.g., via backpropagation). A first loss function addresses errors by the candidate category model 122 by comparing the probability scores for the candidate categories from the candidate category model 122 with the sequence of future interacted categories. As such, this first loss accounts for candidate categories with higher probability scores that don't appear in the sequence of future interacted categories. Such candidate categories are considered to be false positives or negative samples for training the category prediction model 126. The second loss function addresses errors by the category prediction model 126 by comparing the probability scores for the candidate categories from the category prediction model 126 with the sequence of future interacted categories. As such, this second loss function penalizes false negatives - i.e., candidate categories that have lower probability scores from the category prediction model 126 that are present in the sequence of future interacted categories.

During inference, a sequence of interacted items, a sequence of interacted items, and, in some aspects, user features for a given user are accessed. Given the sequence of interacted categories, the candidate category model 122 selects certain categories from the category set for the listing platform 104 as candidate categories. Additionally, the per-user category encoder 124 generates a category embedding for each interacted category for the user based on the sequence of interacted items, and, in some cases, user features for the user. The category embeddings, sequence of interacted categories, and candidate categories are provided as input to the category prediction model 126, which generates a probability score for each candidate category. Based on the probability scores from the category prediction model 126, one or more categories are selected for category-level recommendation to the user.

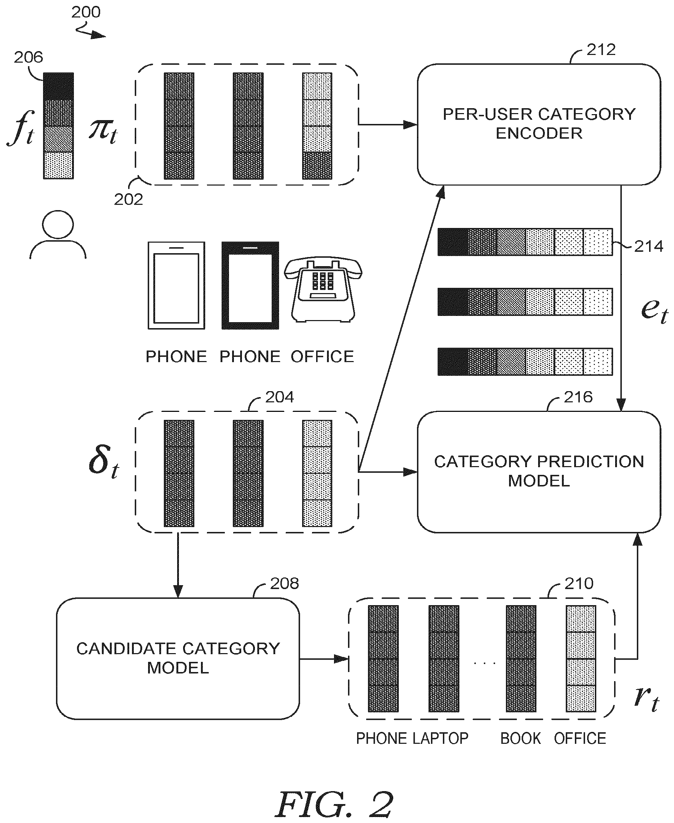

Additional details regarding the cascading category recommender 118 and its components, in accordance with some aspects of the present technology, are provided below with reference to FIGs. 2-5.

The recommendation system 106 further includes a user interface component 120 that provides one or more user interfaces for interacting with the listing platform 104 and/or the recommendation system 106. While shown as part of the recommendation system 106 in FIG. 1, in some configurations, the user interface component 120 can be part of the listing platform 104. The user interface component 120 provides one or more user interfaces to a user device, such as the user device 102. In some instances, the user interfaces can be presented on the user device 102 via the application 108, which can be a web browser or a dedicated application for interacting with the listing platform 104 and/or the recommendation system 106. For instance, the user interface component 120 can provide user interfaces for, among other things, providing category-level recommendations to users based on category predictions made by the cascading category recommender 118. By way of example only and not limitation, category recommendations for a user can be presented on a home page or other webpage of a website provided by the listing platform 104 when the user accesses the website (e.g., via the application 108 on the user device 102).

With reference now to FIG. 2, a block diagram is provided showing on example model architecture 200 for a cascading category recommender (which can correspond to the cascading category recommender of FIG. 1). As shown in FIG. 2, the model architecture includes a candidate category model 208 (which can correspond to the candidate category model 122 of FIG. 1), a per-user category encoder 212 (which can correspond to the per-user category encoder 124 of FIG. 1), and a category prediction model 216 (which can correspond to the category prediction model 126 of FIG. 1).

For the purposes of the description herein, the following notations will be used. Let $U = \{u_1, u_2, ..., u_n\}$ be the set of users and $I = \{i_1, i_2, ..., i_m\}$ be the set of items. Given a set of categories $C = \{c_1, c_2, ..., c_s\}$, a mapping function $g: I \rightarrow C$ indicates the category of each item. For example, g(Book 1) = Book. Each user has some known user features $F = \{f_1, f_2, ..., f_n\}$. Let $\Pi = \{\pi_1, \pi_2, ..., \pi_n\}$ be the set of the sequence of past interactions between users and items. In other words, for each user $u_j$, there is a sequence of past interacted items $\pi_j$. E.g., $\pi_1 = \{Phone 1, Office 1\}$. In some aspects, it is assumed that each user will have at most k known interacted categories. In other words, $|\delta_t| \leq k, \forall \alpha$. For an arbitrary user $u_t$, given this user's feature $f_t$ and past interactions at item level $\pi_t$ and category level $\delta_t$, the goal of the cascading category recommender is to predict some categories $\Gamma = \{\gamma_1, \gamma_2, ..., \gamma_n\}$ that the user is likely to interact with in the future, e.g., $\gamma_1 = \{book\}$ for $u_1$. A summary of notations is shown in Table 1.

**Table 1**

| Notation | Descriptions |
|---|---|
| $u_t$ | User $t$ |
| $i_b$ | Item $b$ |
| $c_x$ | Category $x$ |
| $g$ | Function that maps an item to a category |
| $f_t$ | User feature(s) of user $t$ |

(continued)

| Notation | Descriptions |
|----------|--------------|
| $\pi_t$ | Sequence of past interacted items of user $t$ |
| $\delta_t$ | Sequence of past interacted categories of user $t$ |
| $\gamma_t$ | Sequence of future interacted categories of user $t$ |
| $k$ | Maximum length of $\delta_t$ |
| $M_1$ | Candidate category model |
| $r_t$ | Category list generated by the candidate category model for user $t$ |
| $M_2$ | Category prediction model |

As shown in FIG. 2, the input to the cascading category recommender for a given user $t$ includes a sequence of past interacted items 202 ($\pi_t$), a sequence of past interacted categories 204 ($\delta_t$), and user features 206 ($f_t$). Accordingly, this is illustrative of model training.

With initial reference to the candidate category model 208, this model aims to provide negative samples that fulfill two goals - generate strong negatives and avoid false negatives. The candidate category model 208 is used to infer the probability distribution of future categories for at least two reasons - (1) to explore users' interests at category level holistically; and (2) to provide negative samples to train the category prediction model 216. The candidate category model 208 serves as a candidate list generator and also provides negative samples. In some aspects, the task of candidate generation is treated as a classification problem. The item-level negative is inappropriate for category-level negative samplings, so the item-level interactions ($\pi_t$) are ignored by the candidate category model 208. Accordingly, as shown in FIG. 2, the input to the candidate category model 208 is the sequence of past interacted categories 204 for a user. Given this input, the candidate category model 208 generates a probability distribution for categories from the category set. The probability distribution provides a probability score for each category from the category set, and candidate categories are selected based on corresponding probability scores to a provide a candidate category list 210 ($r_t$). Negative samples comprise any category in the category list 210 that is not also included in the sequence of future interacted categories for the user (i.e., $r_t - \gamma_t$). Also, due to their high scores in a probabilistic model, these negative samples can provide for a high loss in tuning the category prediction model 216.

The choice of negative samples may appear too assertive, yet within the context of category recommendation, their use carries a low risk of being false negatives. Selecting highly likely items from a model can lead to high false negative rates due to the potential similarity between items and the fluid nature of user interests. In contrast, categories are inherently dissimilar to some predefined degree, as otherwise, they would have already been merged into a broader category. Given the apparent distinctions between categories, transitions among them are much harder. Leveraging these substantial gaps within categories enables selecting stronger negative samples, contributing to improved model fine-tuning.

The per-user category encoder 212 generates a category embedding for each category from the sequence of past interacted categories for a user. These category embeddings 214 ($e_t$) are used as input to the category prediction model 216. One objective of this approach is to discern between users who exhibit similarities at the category level. To achieve this, the per-user category encoder 212 takes as input a combination of a user's item-level interactions within each category from the sequence of past interacted items 202 and user features 206 for the user. The per-user category encoder 212 is designed to reconstruct this input information, with the output from the encoder serving as the category embedding for each category interacted with by the user. Consequently, this yields distinct category embeddings for each past interacted category for the user, dependent on both the user and the interacted items within each category. It should be noted that while FIG. 2 shows a configuration in which the category embeddings are generated based on both a combination of user features and interacted items within each category, in other aspects, the category embeddings can be generated based on the interacted items within each category without employing user features.

The category prediction model 216 is trained for category prediction using a loss function that leverages insights from the candidate category model 208. Objectives of training the category prediction model 216 include avoiding false negatives (i.e., truly interested categories are not recommended) and minimizing false positives (i.e., recommending items that do not attract users). To achieve this, in some aspects, the model primarily focuses on optimizing precision rather than recall, distinguishing it from item-level recommenders. As discussed in further detail below, the category prediction model 216 is trained using a specialized differentiable loss function that adjusts penalties based on the output from the candidate category model 208. This trains the category prediction model 216 to avoid the mistakes made by candidate category model 208, which are incorrect categories (i.e., categories that do not appear in the sequence of future interacted categories for a user) that received high probability scores by the candidate category model 208. In some aspects, this additional loss function grows quadratically with respect to the output from the candidate category model 208.

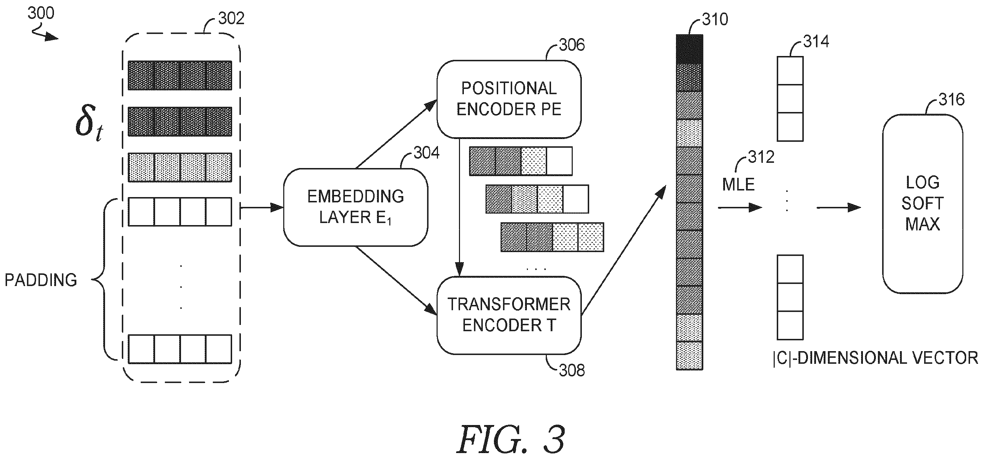

FIG. 3 provides an example model architecture 300 for a candidate category model in accordance with some aspects. The model architecture 300 comprises a transformer-based model. However, it should be noted that the model architecture 300 is provided by way of example only and other model architectures that leverage sequential information could be used for providing a candidate category model. As shown in FIG. 3, the model architecture 300 includes an embedding layer 304 ($E_1$), a positional encoder 306 (PE), a transformer encoder 308 (T), a Maximum Likelihood Estimator 312 (MLE) (which could comprise two fully-connected layers), and a LogSoftMax layer 316.

Initially, the sequence of past interacted categories 302 ($\delta_t$) for the user is provided as input to the embedding layer 304 to get a representation of each of the past interacted categories. Suppose $d_1$ is the embedding dimension of the MLE, then the embedding sequence is $E_1(\delta_t) \in \mathbb{R}^{k \times d_1}$ as k is the maximum length of interaction sequence. With the encoding of each past interacted category, a sequence encoding 310 (e.g., an embedding) for the entire sequence is generated using transformer-like approach. In addition to the encoding of categories from the embedding layer 304, the positional information is also learned through multi-head attention by the positional encoder 306. With the category encodings from the embedding layer 304 and the output from positional encoder $PE(E_1(\delta_t))$, the transformer $T$ provides the sequence encoding 310. The MLE 312 is then trained with the output from the transformer, $T(PE(E_1(\delta_t)), E_1(\delta_t))$ to provide a probability vector 314 of dimension $|C|$. The probability vector 314 provides a probability score for each category from the category set for the listing platform. Finally, the LogSoftMax layer 316 utilizes this probability vector 314 to provide a list of categories with top probability scores ($r_t$).

Since the number of categories is often much smaller compared to items, some aspects treat this recommendation problem as a classification problem. Each user will be classified into one or more of the $|C|$ classes, which indicates the user's future preference(s) in the corresponding categories. In some aspects, the negative log-likelihood loss (NLLLoss), is used as a loss function for training the MLE 312, $M_1$, as follows:

$$L_{MLE} = \sum_{\delta_t \in \Delta} \sum_{c_j \in \gamma_t} NLLLoss\big(M_1(\delta_t), c_j\big)$$

The categories with top probability scores form a list of $r_t$, which will be used in category prediction model. During the training, in addition to this list of categories, their corresponding probability vector $y_t^{M_1}$ is also passed to the category prediction model in order to compute the loss for false positives, as will be described in further detail below.

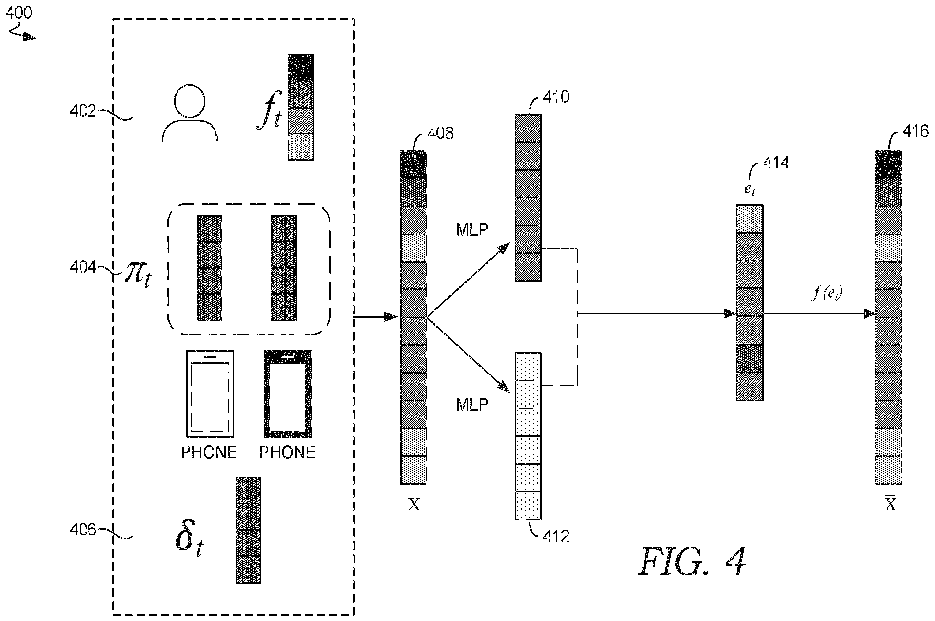

FIG. 4 provides an example model architecture 400 for a per-user category encoder in accordance with some aspects. It should be noted that the model architecture 400 is provided by way of example only and other model architectures could be used for providing a per-user category encoder.

One particular challenge is that not all users like the same kinds of products within a category. This means that even if two users both interact with a category, they might pick totally different items from that category. This difference in choices highlights a challenge with just using category-level data to understand what users like as it misses the specific details of each user's preferences. To solve this problem, some aspects leverage data regarding the items with which each user interacts within certain categories and, in some configurations, also uses user features, such as demographic information (e.g., age or gender). By doing this, per-user representation (i.e., embedding) of a category can be generated that takes into account these finer details of what different users prefer.

The configuration in FIG. 4 employs Variational Autoencoder (VAE) to learn these detailed category embeddings. A category embedding is generated for each past interacted category for a user. For a given user $t$ and for a given past interacted category $\delta_t$ for the user, the model inputs a concatenated vector 408 $X = [f_t; \pi_t; \delta_t]$, consisting of $f_t$ (features 402 of the user); $\pi_t$ (items from the user's past interacted items with the past interacted category $\delta_t$); and $\delta_t$ (the representation of the past interacted category 406). This vector 408 is processed through two Multilayer Perceptron (MLP) units, producing two outputs: the mean $\mu_t$ 410 and the log-variance $\log \sigma_t^2$ 412 of a latent distribution. By sampling from this distribution using the parameters $\mu_t$ and $\log \sigma_t^2$, a hidden representation $e_t$ 414 is obtained, which is then decoded to reconstruct the input into $\hat{X}$ 416. This process ensures that the resultant category embedding, $e_t$ 414, accurately encapsulates the item-level preferences that are tailored to user demographics within the context of the past interacted category. This process is performed for each past interacted category for the user to provide a category embedding for each.

Some aspects employ a VAE for several reasons. First, VAEs are particularly adept at learning complex, high-dimensional data distributions, making them well-suited for capturing the intricate relationships between users, their user features, and their interactions with items within categories. Additionally, the probabilistic nature of VAEs allows for the generation of continuous, smooth category embeddings that can effectively interpolate the nuanced preferences of users. Furthermore, the reconstruction objective of the VAE ensures that the learned embeddings maintain a strong connection to the original data, thereby preserving the integrity of user preferences while also facilitating the discovery of latent structures within the data.

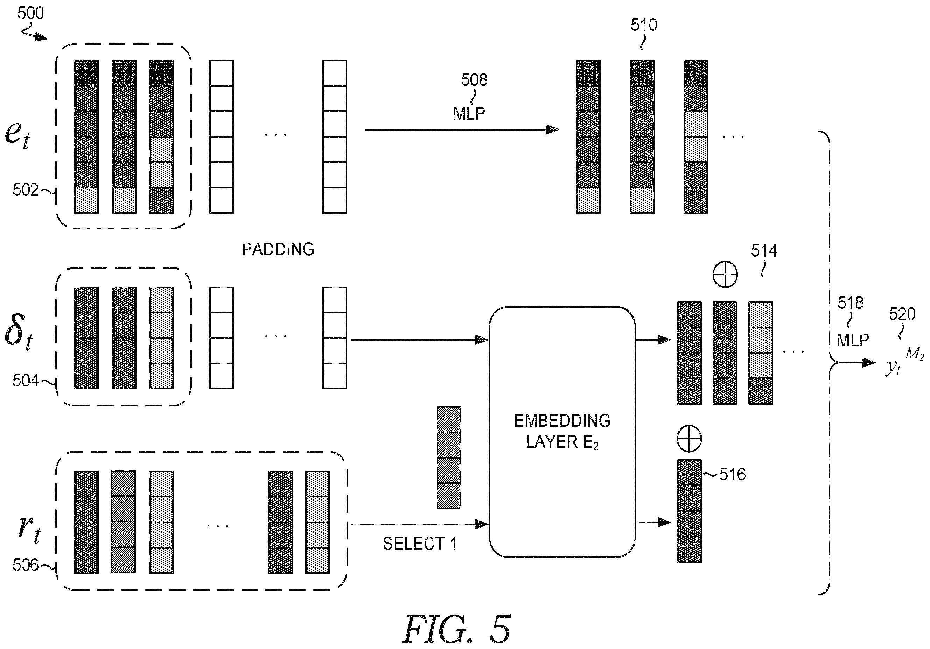

FIG. 5 provides an example model architecture 500 for a category prediction model in accordance with some aspects. It should be noted that the model architecture 500 is provided by way of example only and other model architectures could be used for providing a category prediction model.

The category prediction model uses the outputs from the candidate category model and the per-user category embedder to perform a fine category prediction. As shown in FIG. 5, the category prediction model takes the category embeddings from the per-user category encoder and uses an MLP 508 (e.g., a two-layer fully-connected network) to process them to provide embeddings 510. Also, an embedding layer $E_2$ learns embeddings 514 for past interacted categories and an embedding 516 for each individual candidate category $c_j \in r_t$. All these embeddings are concatenated together for each candidate category as input to an MLP 518 that outputs a probability score 520 $y_t^{M_2}$ of each candidate category $c_j$ for this user.

In some aspects, the category prediction model is trained using a loss function that includes two parts - a first loss function that imposes a penalty based on false positives from the candidate category model and a second loss function that addresses false negatives from the category prediction model. Accordingly, the candidate prediction mode is trained to correct the mistakes made by the candidate category model and avoid false positives. The first loss function is designed to result in a higher loss for candidate categories with a high probability scores that don't appear in the sequence of future interacted categories for the user. On the other hand, if a candidate category from the candidate category model is indeed a true positive (i.e., the candidate category is a category that appears in the sequence of future interacted categories for the user), it should incur zero loss. In some aspects, the first loss function is defined by the following differentiable loss function:

$$L_{error} = \sum_t \left( ReLU\left(y_t^{M_1} - y_t\right)\right)^2$$

where $y_t^{M_1}$ is a sequence indicating the probability score from the candidate category model for each candidate category $c_j$ in $r_t$, and $y_t \in \{0,1\}^{|r_t|}$ is a sequence indicating the ground truth of each candidate category $c_j$ in $r_t$ where its $j^{th}$ element is 1 if and only it appears as a category in the sequence of future interacted categories for the user (i.e., $c_j \in \gamma_t$).

As noted above, the second loss function penalizes false negatives from the candidate prediction model. In some aspects, the second loss function is defined by the following mean-square error function:

$$L_{MSE} = \sum_t \left(y_t - y_t^{M_2}\right)^2$$

where $y_t^{M_2}$ is a sequence indicating the probability score from the category prediction model for each candidate category $c_j$ in $r_t$, and $y_t \in \{0,1\}^{|r_t|}$ is a sequence indicating the ground truth of each candidate category $c_j$ in $r_t$ where its $j^{th}$ element is 1 if and only it appears as a category in the sequence of future interacted categories for the user (i.e., $c_j \in \gamma_t$).

Accordingly, the total loss function for training the category prediction model is some aspects is provided as follows:

$$L_{prediction} = \sum_t \left( ReLU\left(y_t^{M_1} - y_t\right)\right)^2 + \left(y_t - y_t^{M_2}\right)^2$$

**Example Methods for Cascading Category Recommender**

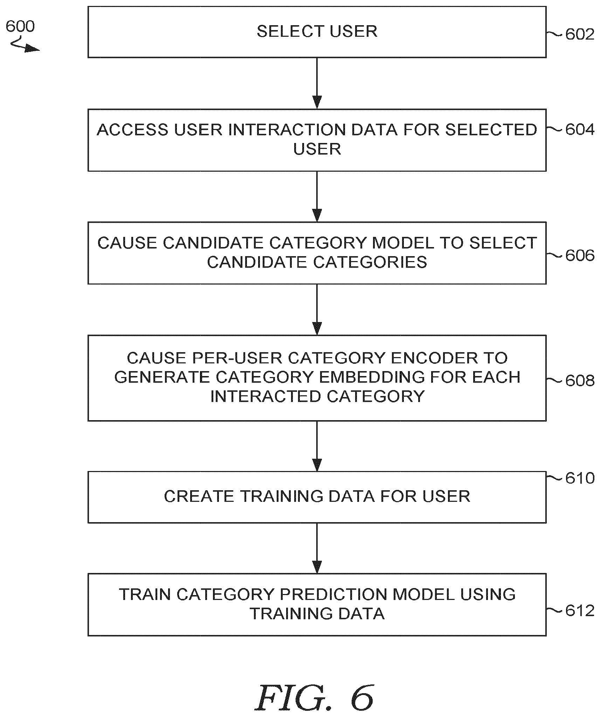

With reference now to FIG. 6, a flow diagram is provided that illustrates a method 600 for training a category prediction model of a cascading category recommender in accordance with some aspects. The method 600 may be performed at least in part, for instance, by the recommendation system 106 of FIG. 1. Each block of the method 600 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few.

The method 600 presents a process for a single user. It should be understood that in practice, the method 600 can be iterated for a number of different users to train the category prediction model. As shown at block 602, a user is selected, and user interaction data for the selected user is accessed, as shown at block 604. The user interaction data can include a sequence of past interacted categories, a sequence of past interacted items, and a sequence of future indicated categories for the user. In some aspects, interacted categories can be identified can mapping interacted items for the user to their corresponding categories. In some aspects, the interacted categories for the user can be divided into past interacted categories and future interacted categories defining interacted categories before a point in time as past interacted categories and interacted categories after the point in time as future interacted categories. Although not shown in FIG. 6, in some aspects, user features for the selected user are also accessed.

A candidate category model is caused to select candidate categories, as shown at block 606. This can include providing the sequence of past interacted categories as input to the candidate category model, which generates a probability score for each category from the category set defined for the listing platform. Categories with the highest probability scores (e.g., the top N categories) are selected as candidate categories.

A per-user category encoder is caused to generate a category embedding for each past interacted category, as shown at block 608. For a given past interacted category, this can include providing as input to the per-user category encoder: the past interacted category, past interacted item(s) for the user within the past interacted category, and, in some aspects, user features for the user. Based on these inputs, the per-user category encoder generates a category embedding for the past interacted category.

As shown at block 610, training data is created for the user. The training data includes the category embeddings from the per-user category encoder, the sequence of past interacted categories for the user, the candidate categories with their corresponding probability scores from the candidate category model, and the sequence of future interacted categories for the user.

The training data is used to train the category prediction model, as shown at block 612. This can include causing the category prediction model to generate a probability score for each candidate category based on the category embeddings, the sequence of past interacted categories, and the candidate categories. A loss is then determined. In some aspects, the loss employs two loss functions - a first function based on the probability scores from the candidate category model and the future interacted categories for the user; and a second function based on the probability scores from the category prediction model and the future interacted categories for the user. The category prediction model is then updated based on the loss, for instance, by updating weights of the model via backpropagation.

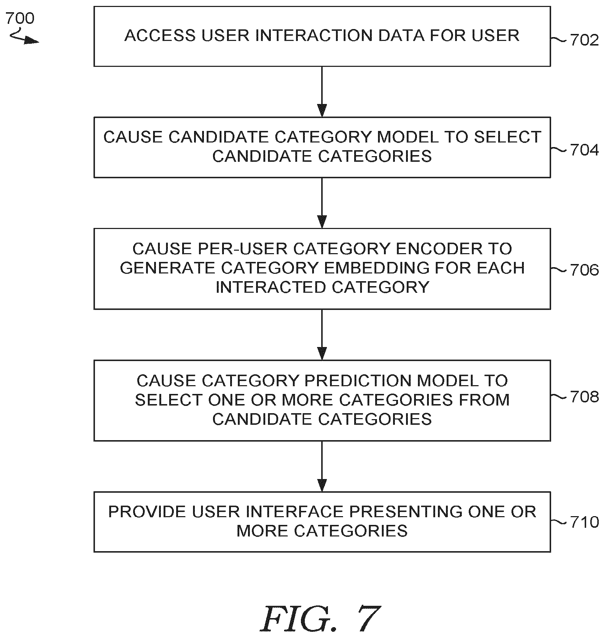

Turning next to FIG. 7, a flow diagram is provided showing a method 700 for generating category recommendations for a user using a cascading category recommender. As shown at block 702, user interaction data for the user is accessed. The user interaction data can include a sequence of interacted categories and interacted items for the user. In some instances, the sequence of interacted categories is determined by mapping each interacted item for the user to its corresponding category. Although not shown in FIG. 7, in some aspects, user features are also accessed.

A candidate category model is caused to select candidate categories, as shown at block 704. This can include providing the sequence of interacted categories as input to the candidate category model, which generates a probability score for each category from the category set defined for the listing platform. Categories with the highest probability scores (e.g., the top N categories) are selected as candidate categories.

A per-user category encoder is caused to generate a category embedding for each interacted category, as shown at block 706. For a given interacted category, this can include providing as input to the per-user category encoder: the interacted category, interacted item(s) for the user within the interacted category, and, in some aspects, user features for the user. Based on these inputs, the per-user category encoder generates a category embedding for the interacted category.

As shown at block 708, the category prediction model is caused to select one or more categories (from the candidate categories) for recommendation. This can include causing the category prediction model to generate a probability score for each candidate category based on the category embeddings, the sequence of interacted categories, and the candidate categories. One or more categories can then be selected for recommendation based on the probability scores. For instance, the top K categories based on probability score can be selected.

A user interface presenting the one or more categories is provided, as shown at block 710. For instance, a webpage could be provided to a user device of the user that presents each category as a user-selectable element that, when selected by the user, provides items or other information associated with the category.

**Exemplary Operating Environment**

Having described implementations of the present disclosure, an exemplary operating environment in which embodiments of the present technology may be implemented is described below in order to provide a general context for various aspects of the present disclosure. Referring initially to FIG. 8 in particular, an exemplary operating environment for implementing embodiments of the present technology is shown and designated generally as computing device 800.

Computing device 800 is but one example of a suitable computing environment and is not intended to suggest any limitation as to the scope of use or functionality of the technology. Neither should the computing device 800 be interpreted as having any dependency or requirement relating to any one or combination of components illustrated.

The technology may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output (I/O) ports 818, input/output components 820, and illustrative power supply 822. Bus 810 represents what may be one or more busses (such as an address bus, data bus, or combination thereof). Although the various blocks of FIG. 8 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors recognize that such is the nature of the art, and reiterate that the diagram of FIG. 8 is merely illustrative of an exemplary computing device that can be used in connection with one or more embodiments of the present technology. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data.

Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. The terms "computer storage media" and "computer storage medium" do not comprise signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc. The I/O components 820 may provide a natural user interface (NUI) that processes air gestures, voice, or other physiological inputs generated by a user. In some instance, inputs may be transmitted to an appropriate network element for further processing. A NUI may implement any combination of speech recognition, touch and stylus recognition, facial recognition, biometric recognition, gesture recognition both on screen and adjacent to the screen, air gestures, head and eye-tracking, and touch recognition associated with displays on the computing device 800. The computing device 800 may be equipped with depth cameras, such as, stereoscopic camera systems, infrared camera systems, RGB camera systems, and combinations of these for gesture detection and recognition. Additionally, the computing device 800 may be equipped with accelerometers or gyroscopes that enable detection of motion.

The present technology has been described in relation to particular embodiments, which are intended in all respects to be illustrative rather than restrictive. Alternative embodiments will become apparent to those of ordinary skill in the art to which the present technology pertains without departing from its scope.

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described herein may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however, the distributed computing environment depicted herein is merely exemplary. Components can be configured for performing novel embodiments of embodiments, where the term "configured for" can refer to "programmed to" perform particular tasks or implement particular abstract data types using code. Further, while embodiments of the present technology may generally refer to the technical solution environment and the schematics described herein, it is understood that the techniques described may be extended to other implementation contexts.

From the foregoing, it will be seen that this technology is one well adapted to attain all the ends and objects set forth above, together with other advantages which are obvious and inherent to the system and method. It will be understood that certain features and subcombinations are of utility and may be employed without reference to other features and subcombinations. This is contemplated by and is within the scope of the claims.

**Claims**

1. One or more computer storage media storing computer-useable instructions that, when used by one or more computing devices, cause the one or more computing devices to perform operations, the operations comprising:

   creating a training data set comprising training data for each user from a plurality of users, wherein a first training data is created for a first user by:

   accessing a sequence of past interacted items and a sequence of past interacted categories for the first user,
   selecting, using a candidate category model, a plurality of candidate categories from a category set based on the sequence of past interacted categories, and
   generating, using a per-user category encoder, a category embedding for each past interacted category from the sequence of past interacted categories based on a subset of the sequence of past interacted items corresponding to each past interacted category; and

   training a category prediction model using the training data set.

2. The one or more computer storage media of claim 1, wherein the sequence of past interacted categories for the first user is obtained by mapping each past interacted item from the sequence of past interacted items to a corresponding category from the category set.

3. The one or more computer storage media of claim 1 or 2, wherein the category embedding for each past interacted category from the sequence of past interacted categories is generated by the per-user category encoder also based on one or more user features for the first user.

4. The one or more computer storage media of any one of claims 1 to 3, wherein selecting the plurality of candidate categories comprises:

   causing the candidate category model to generate a first probability score for each category from the category set based on the sequence of past interacted categories; and
   selecting the plurality of candidate categories based on the first probability scores.

5. The one or more computer storage media of claim 4, wherein training the category prediction model using the first training data of the training data set comprises:

   causing the category prediction model to generate a second probability score for each candidate category from the plurality of candidate categories using the category embeddings and the sequence of past interacted categories;
   computing a first loss based on the first probability scores for the plurality of candidate categories from the candidate category model;
   computing a second loss based on the second probability scores for the plurality of candidate categories from the category prediction model; and
   updating the category prediction model based on the first loss and the second loss.

6. The one or more computer storage media of claim 5, wherein the first loss and the second loss are computed using a ground truth set of future interacted categories for the first user; and
   wherein, optionally, the sequence of past interacted categories and the ground truth set of future interacted categories for the first user are obtained by:

   accessing a sequence of interacted categories for the first user;
   defining a first subset of the sequence of interacted categories as the sequence of past interacted categories; and
   defining a second subset of the sequence of interacted categories as the ground truth sequence of future interacted categories, wherein the second subset occurs after the first subset in the sequence of interacted categories.

7. A computer-implemented method comprising:

   receiving a sequence of interacted items and a sequence of interacted categories for a user;
   selecting, using a candidate category model, a plurality of candidate categories from a category set based on the sequence of interacted categories;
   generating, using a per-user category encoder, a category embedding for each interacted category from the sequence of interacted categories based on a subset of the sequence of interacted items corresponding to each interacted category;
   selecting, using a category prediction model, one or more categories from the plurality of candidate categories based on the category embeddings and the sequence of interacted categories; and
   providing a user interface presenting the one or more categories.

8. The computer-implemented method of claim 7, wherein the sequence of interacted categories for the user is obtained by mapping each interacted item from the sequence of interacted items to a corresponding category from the category set; and/or
   wherein the category embedding for each interacted category from the sequence of interacted categories is generated by the per-user category encoder also based on one or more user features for the user.

9. The computer-implemented method of claim 7 or 8, wherein selecting the plurality of candidate categories comprises:

causing the candidate category model to generate a probability vector comprising a first probability score for each category from the category set based on the sequence of interacted categories; and
selecting the plurality of candidate categories based on the first probability scores; and

wherein, optionally, selecting the one or more categories from the plurality of candidate categories comprises:

causing the candidate prediction model to generate a second probability score for each candidate category based on the category embeddings and the sequence of interacted categories; and
selecting the one or more categories based on the second probability scores.

10. The computer-implemented method of any one of claims 7 to 9, wherein the user interface comprises a webpage of a website for a listing platform.

11. A computer system comprising:

one or more processors; and
one or more computer storage media storing computer-useable instructions that, when used by the one or more processors, causes the computer system to perform operations comprising:

creating a training data set comprising training data for each user from a plurality of users, wherein a first training data is created for a first user by:

accessing a sequence of past interacted items and a sequence of past interacted categories for the first user,
selecting, using a candidate category model, a plurality of candidate categories from a category set based on the sequence of past interacted categories, and
generating, using a per-user category encoder, a category embedding for each past interacted category from the sequence of past interacted categories based on a subset of the sequence of past interacted items corresponding to each past interacted category; and

training a category prediction model using the training data set.

12. The computer system of claim 11, wherein the sequence of past interacted categories for the first user is obtained by mapping each past interacted item from the sequence of past interacted items to a corresponding category from the category set; and/or
wherein the category embedding for each past interacted category from the sequence of past interacted categories is generated by the per-user category encoder also based on one or more user features for the first user.

13. The computer system of claim 11 or 12, wherein selecting the plurality of candidate categories comprises:

causing the candidate category model to generate a first probability score for each category from the category set based on the sequence of past interacted categories; and
selecting the plurality of candidate categories based on the first probability scores.

14. The computer system of claim 13, wherein training the category prediction model using the first training data of the training data set comprises:

causing the category prediction model to generate a second probability score for each candidate category from the plurality of candidate categories using the category embeddings and the sequence of past interacted categories;
computing a first loss based on the first probability scores for the plurality of candidate categories from the candidate category model;
computing a second loss based on the second probability scores for the plurality of candidate categories from the category prediction model; and
updating the category prediction model based on the first loss and the second loss.

15. The computer system of claim 14, wherein the first loss and the second loss are computed using a ground truth set of future interacted categories for the first user; and

wherein, optionally, the sequence of past interacted categories and the ground truth set of future interacted categories for the first user are obtained by:

accessing a sequence of interacted categories for the first user;
defining a first subset of the sequence of interacted categories as the sequence of past interacted categories; and defining a second subset of the sequence of interacted categories as the ground truth sequence of future interacted categories, wherein the second subset occurs after the first subset in the sequence of interacted categories.

FIG. 1

*FIG. 2*

*FIG. 3*

FIG. 4

EP 4 651 065 A1

FIG. 5

EP 4 651 065 A1

600

| SELECT USER | ~602 |

↓

| ACCESS USER INTERACTION DATA FOR SELECTED USER | ~604 |

↓

| CAUSE CANDIDATE CATEGORY MODEL TO SELECT CANDIDATE CATEGORIES | ~606 |

↓

| CAUSE PER-USER CATEGORY ENCODER TO GENERATE CATEGORY EMBEDDING FOR EACH INTERACTED CATEGORY | ~608 |

↓

| CREATE TRAINING DATA FOR USER | ~610 |

↓

| TRAIN CATEGORY PREDICTION MODEL USING TRAINING DATA | ~612 |

*FIG. 6*

700

ACCESS USER INTERACTION DATA FOR USER ~702

CAUSE CANDIDATE CATEGORY MODEL TO SELECT CANDIDATE CATEGORIES ~704

CAUSE PER-USER CATEGORY ENCODER TO GENERATE CATEGORY EMBEDDING FOR EACH INTERACTED CATEGORY ~706

CAUSE CATEGORY PREDICTION MODEL TO SELECT ONE OR MORE CATEGORIES FROM CANDIDATE CATEGORIES ~708

PROVIDE USER INTERFACE PRESENTING ONE OR MORE CATEGORIES ~710

*FIG. 7*

MEMORY

812

PROCESSOR(S)

814

PRESENTATION
COMPONENT(S)

816

I/O PORT(S)

818

I/O COMPONENTS

820

POWER SUPPLY

822

800

810

*FIG. 8.*

Europäisches
Patentamt

European
Patent Office

Office européen
des brevets

# EUROPEAN SEARCH REPORT

**Application Number**

EP 25 17 5252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/161165 A1 (GHARIBSHAH ZHABIZ [US] ET AL) 16 May 2024 (2024-05-16)<br>* paragraph [0003] - paragraph [0012] *<br>* paragraph [0031] - paragraph [0058] *<br>* paragraph [0070] *<br>----- | 1-15 | INV.<br>G06Q30/0601<br>G06N3/045<br>G06N3/08 |
| X | US 2022/237682 A1 (ZHAO HANDONG [US] ET AL) 28 July 2022 (2022-07-28)<br>* paragraph [0004] - paragraph [0007] *<br>* paragraph [0025] - paragraph [0053] *<br>* paragraph [0108] - paragraph [0123] *<br>----- | 1-15 | |

**TECHNICAL FIELDS SEARCHED (IPC)**

G06Q
G06N

The present search report has been drawn up for all claims

| Place of search | Date of completion of the search | Examiner |
|---|---|---|
| The Hague | 16 July 2025 | Moynihan, Maurice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 5252

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2025

| Patent document cited in search report | Publication date | Patent family member(s) | Publication date |
|---|---|---|---|
| US 2024161165 A1 | 16-05-2024 | NONE | |
| US 2022237682 A1 | 28-07-2022 | NONE | |

EPO FORM P0459

For more details about this annex : see Official Journal of the European Patent Office, No. 12/82

# EP 4 651 065 A1

**REFERENCES CITED IN THE DESCRIPTION**

**Patent documents cited in the description**

- US 63649168